# EUROPEAN PATENT APPLICATION

(11) **EP 4 811 253 A1**
(43) Date of publication of application: **23.09.2026**
(21) Application number: 25182013.0
(22) Date of filing: 11.06.2025
(51) Int. Cl.: G06Q 20/34, H04W 12/30

(54) **OBJECT-BASED APPROACH TO DIGITIZE AND UPDATE VIRTUAL CARDS ONTO MOBILE DEVICES OVER-THE-AIR, IN A SECURE ELEMENT OR IN A HOST CARD EMULATION ENVIRONMENT, FOLLOWING A UNIFIED FLOW**

(30) Priority: 20.03.2025 IN 202541025029
(71) Applicant: NXP B.V., 5656 AG Eindhoven (NL)
(72) Inventor: Gouraud, Thierry Jean-Luc, 5656AG Eindhoven (NL); Azoulai, Jonathan, 5656AG Eindhoven (NL); Nagampalli, Udaikamal, 5656AG Eindhoven (NL); Hollerweger, Sandra, 5656AG Eindhoven (NL)
(74) Representative: Krott, Michel

(57) **Abstract**

A method of remotely digitizing and updating a virtual card is proposed which is agnostic to emulation environments.

## Description

### FIELD

The invention relates to a method and system. Particularly, but not exclusively, the invention relates to a computer-implemented method and system. Further particularly, but not exclusively, the invention relates to an object-based approach to digitize and update virtual cards onto mobile devices, in a secure element or in a host card emulation environment, following a unified flow.

### BACKGROUND

Virtual cards provide digital representations of smart cards and are often implemented through computing devices in association with applications which implement, for example, contactless payments or access control.

Virtual cards typically require emulation environments for them to work as they enable the smart card to be virtualised. There are different emulation environments which can be used, such as, for example, embedded secure elements and host card emulation environments.

Virtual cards are over-the-air managed in an emulation environment. The over-the-air management of the virtual card includes the card provisioning and update. The over-the-air virtual card updates are needed to maintain the functionality and security. Alternatively, the card update could be done through the contactless interface of the emulation environment.

Aspects and embodiments were conceived with the foregoing in mind.

### SUMMARY

Aspects relate to the provisioning and update of virtual cards associated with an application which is implemented by a computing device.

Viewed from a first aspect, there may be provided a computer-implemented method of provisioning a virtual card on a computing device. Provisioning a virtual card may correspond to generating an instance of a virtual card which is implemented on a computing device using an emulation environment. The virtual card may be associated with an application executed by the computing device. The application, for example, may be a digital wallet. The method may be implemented by a processing resource. An example of such a processing resource may be an application module (e.g. a device application) which provides the processing, hardware and software resources necessary to implement the provisioning of the virtual card on the computing device. An example of such a computing device may be a mobile computing device.

The method may comprise providing a request to a card management server for a virtual card associated with an application. An example of a card management server may be a card management service backend generating provisioning and update data to over-the-air manage a virtual card. A card management server is a resource configured to receive requests from the computing device and to generate the data needed by the computing device to emulate the virtual card. The card management server may also comprise the one or more hardware and software resources necessary to implement authentication and verification of the emulation environment when the request is received.

The request may comprise cryptographic data identifying an emulation environment used to implement the virtual card on the computing device. This may comprise one or more cryptographic assets such as, for example, a certificate chain and/or one or more public keys. The request may be provided to the card management server using an environment agnostic pathway.

One or more secret sharing approaches may be used to authenticate the emulation environment on a card management server. One or more secret sharing approaches may be used to authenticate and encrypt a card object by the emulation environment or the card management server. This may involve sharing one or more digital certificates, certificate chains or public keys.

An environment agnostic pathway means that the data corresponding to the request is transmitted between the emulation environment and the card management server via a route which is agnostic to the emulation environment which is to be used to implement the virtual card.

The method may further comprise receiving a card object corresponding to the virtual card from the card management server, wherein the card object is received using an environment agnostic pathway. The card object may comprise one or more of metadata for the management of the virtual card (e.g. data identifying the emulation environment used to implement the virtual card), cryptographic assets which are used to establish a transport session key, a data model of the card, card data and card keys which are encrypted and signed with the transport session key. The transport session keys are exclusively shared between the emulation environment in which the virtual card is provisioned and the card management server. The transport session keys are different per card object transfer between card emulation and the card management server and between the card management server and the card emulation. The transport session keys encrypt and sign a card object except card metadata.

The method may comprise importing the card object into the emulation environment. The import may deploy one or more import application protocol data units (APDUs). The APDUs are generated by the application module. The APDUs are agnostic to the card data model, card data and card keys. The method may further comprise generating an instance of the virtual card in the emulation environment. This may comprise generating the transport session key, authenticating and decrypting card data and card keys and then creating and provisioning an instance of the virtual card.

A method in accordance with the first aspect unifies the process of provisioning and digitising virtual cards on computing devices (e.g. mobile computing devices) and provides a provisioning process which is independent of the emulation environment. The method unifies the communication between all of the involved components (e.g. backend servers). This also means that card backend servers do not need separate logic for each emulation environment, which improves the maintainability and robustness of the system.

Optionally, the environment agnostic pathway comprises one or components which are agnostic to the emulation environment. That is, the application programming interface (API) of those components does not depend on the emulation environment.

Optionally, the card object comprises one or more of: metadata identifying the emulation environment which implements the virtual card; transport session key generation data to establish a transport session key; a data model for the card; card data; and card keys.

Optionally, wherein one or more of the card data and the card keys may be encrypted using the transport session key. The transport session key may be determined by the cryptographic assets which are provided by the card management server and the emulation environment.

Optionally, the generation of the instance of the virtual card may comprise the generation of the transport session key using the transport session key generation data and the decryption of the card data and card keys using the transport session key.

Optionally, the card data and the card keys are encrypted with the transport session key and are signed with a signature generated using the transport session key.

Optionally, the emulation environment may be one of a host card emulation or a secure element.

Viewed from a second aspect, there may be provided a computer-implemented method of updating a virtual card on a computing device. The virtual card provisioned in accordance with the first aspect. The method implemented by a processing resource which may be described as an application module or device application. The processing resource may be used to implement an application associated with the virtual card.

The method may comprise initialising a card update process. The card update process may be initiated by the processing resource. This may be responsive to user input. This may be responsive to a request from a card management server. This may comprise allocating one or more hardware and/or software resources necessary to implement the card update process. The method may further comprise obtaining a card object from an emulation environment associated with the application. The card object may comprise cryptographic assets associated with the emulation environment. The cryptographic assets may comprise data which can be used to establish a transport session key which may be used to encrypt card data and card keys. The transport session key may also be used to sign the card data and card keys. The method may further send the card object to an card management server with a request for an updated card object. The card object may be sent using an environment agnostic pathway. An environment agnostic pathway may mean that the data corresponding to the request is transmitted between the emulation environment and the card management server via a route which is agnostic to the emulation environment which is to be used to implement the virtual card. The card management server may be the card management server of the first aspect. The method may further comprise receiving an updated card object from the card management server via an environment agnostic pathway. The method may further comprise updating the virtual card using the updated card object.

A method in accordance with the second aspect unifies the process of updating virtual cards on computing devices (e.g. mobile computing devices) and provides an update process which is independent of the emulation environment. The method unifies the communication between all of the involved components (e.g. backend servers). This also means that card backend servers do not need separate logic for each emulation environment, which improves the maintainability of the system.

Optionally, the method further comprises, responsive to updating the virtual card using the updated card object, verifying the update and transmitting a verification notification to the card management server.

Optionally, the cryptographic assets may comprise at least one of: data to enable establishment of a session key; card data; cryptographic keys associated with the virtual card; or cryptographic keys encrypted and signed with a transport session key associated with the emulation environment.

Optionally, the emulation environment is at least one of an embedded secure element or a host card emulation.

Optionally, obtaining the card object from the emulation environment comprises issuing a command application protocol data unit identifying the card object to the emulation environment and receiving a response application program data unit containing the card object. The APDUs may be referred to respectively as export APDUs.

Optionally, the request for an updated card object may comprises a call to an emulation environment agnostic application programming interface.

Optionally, updating the virtual card using the updated card object comprises:
receiving the updated card object; and
importing the updated card object into the emulation environment.

Optionally, importing the virtual card object to the emulation environment comprises the application module issuing an APDU which may be referred to as import APDU, containing the card object.

Optionally, the updating of the virtual card may comprises one or more of: generating a transport session key; using the transport session key to decrypt at least one card keys and card data received from the card management server; and provisioning an instance of the updated card on the emulation environment based on the authenticated card data and card keys and the decrypted at least one card key and card data.

Optionally, the cryptographic assets may comprise one or more of property data which identifies the emulation environment; and/or a certificate chain which is used by the card management server to authenticate the emulation environment

Optionally, the base key computed by the card management service may be generated based on a public key associated with the card in the emulation environment combined with a private key associated with the card management service backend. The transport session key is derived from the base key with a key derivation function. The base key is different per virtual card. The key derivation function may based on the HMAC function where the session key is equal to HMAC(base key, SDR), where SDR is different for each card object and is generated by the component which generates the card object.

Optionally, the base key computed by the emulation environment may be generated based on a public key associated with the card in the card management service backend combined with a private key associated with the emulation environment. The transport session key is derived from the base key with a key derivation function. The key derivation function may based on the HMAC function where the session key is equal to HMAC(base key, SDR), where SDR is different for each card object and is generated by the component which generates the card object.

Optionally, the update card object may be authenticated by the emulation environment.

Optionally, the authentication may be based on one or more of: a certificate chain provided by the management server; and a public key associated with the card management server.

Optionally, the card object may comprises at least one of card keys and user data; a certificate chain; or at least one random derivation number used to derive transport session key.

Aspects may also relate to a non-transitory computer readable storage medium having stored thereon executable instructions that, as a result of being executed by a processor of a computer system, cause the computer system to at least perform the method of any one of the first or second aspects.

Aspects may also relate to a system configured to implement the method of any one of the first or second aspects.

Aspects may also relate to a processing resource comprising a processor and memory including executable instructions that, as a result of execution by the processor, causes the reader to perform the method of any one of the first or second aspects.

### DESCRIPTION

An embodiment will now be described by way of example only and with reference to the following drawings in which:
Figure 1a illustrates a series of steps to be used as part of a method which can be used to digitise a virtual card;
Figure 1b illustrates a series of steps to be used as part of a method which can be used to update a virtual card associated with an application on a computing device;
Figure 2 illustrates a computing device which is configured to utilise a virtual card which can be updated in accordance with the embodiment;
Figure 3 provides a schematic illustration of the relationship between a computing device and an card management server in accordance with the embodiment;
Figure 4 illustrates the relationship between certificate authorities, service backend and the emulation environment to be used in accordance with the embodiment;
Figure 5 illustrates an example of the key management in the card management service backend;
Figure 6 illustrates the key management in the emulation environment; and
Figures 7a and 7b illustrate the key management in the certificate authorities.

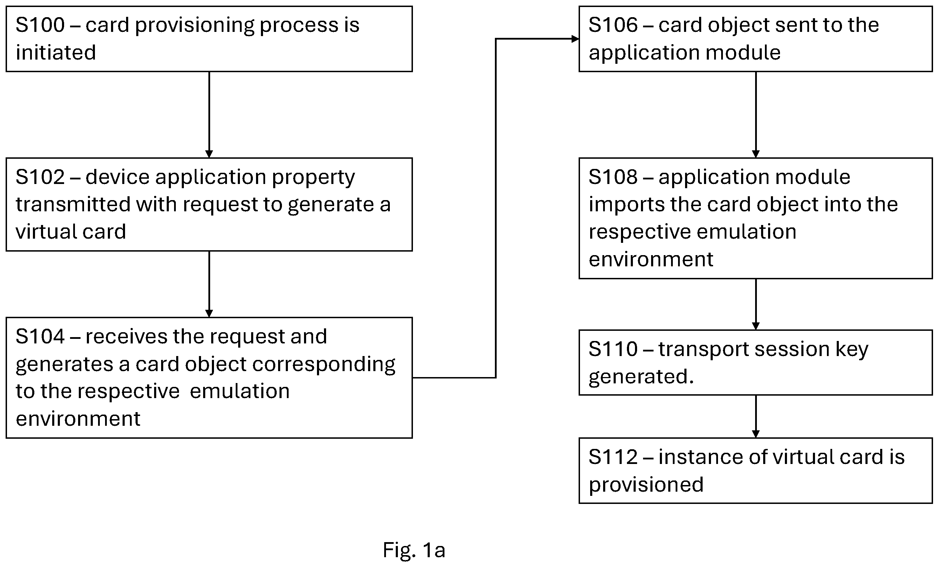

We will now describe, with reference to Figure 1a, a method 100a of digitising a virtual card on a computing device 200. The computing device 200 runs an application module 212 which causes the computing device 200 to implement specific functionality which enables the user of the device to use that specific functionality. This specific functionality may be, for example, used to facilitate financial transactions, access control, or transport ticketing.

The card provisioning process is described below with reference to Figure 1a. A signature service is installed on the emulation environment 206 and the application module 212. The signature service may be the same for both emulation environment 206 and the application module 212. The emulation environment 206 is also configured to generate cryptographic keys using, for example elliptic curve cryptography and, indeed, generates a key pair using, for example elliptic curve cryptography (ECC).

The key pair is called Application. ECKA and this is generated per virtual card 202 which is implemented using the emulation environment 206. The public key part of this key pair is embedded in a certificate signed by the signature service.

Prior to step S100, a digital certificate (CERT.SIGN.AUT) is signed with a signature generated using the signature service. The signature service has a key pair (i.e. private and public key) which are generated using, for example, elliptic curve cryptography. A public key is generated for the application module 212.

In a step S100, the application module 212 initiates a card provisioning process. That is, the application module 212 requests the data needed to generate a virtual card on the computing device 200. The virtual card is needed to implement the functionality associated with the application provided by the application module 212. The application module 212 retrieves data which identifies whether a card emulation environment 206 is an embedded secure element (SE) or host card emulation (HCE). The application module 212 also retrieves data (e.g. emulation properties) which indicates the type of the emulation environment available on the computing device, including its properties like, for example, the spare processing capacity of the respective card emulation environment, which may include the remaining available memory on the respective card emulation environment. The retrieved data is embedded by the application module 212 in a device application property object. The device application property object may be a JSON object. The device application property object also comprises cryptographic assets such as, for example, a certificate chain (CERT.Application.ECKA and CERT.SIGN.AUT). This is used to verify the emulation environment 206. In a step S102, the device application property object is transmitted, with a request for the data needed to generate a virtual card, to a card management service backend 208. The transmission of the request may be implemented using a suitable over-the-air (OTA) protocol such as wireless internet or a cellular network.

The card management service backend 208 also utilises a signature service to generate a digital certificate and a permission certificate signed by the certificate authority (CA).

In a step S104, the card management service backend 208, on receiving the request with the device application property object, retrieves the data which identifies the card emulation environment 206. The card management service backend 208 verifies the emulation environment 206 using the cryptographic assets (e.g. the certificate chain). The application public key (Application.ECKA public key) is combined with the card.ECKA private key (the virtual card private key) using an ECC key agreement algorithm or another suitable technique to generate a transport base key. The transport base key is then stored in a database at the card management service backend 208 and is used to derive a transport session key (using standard techniques), to encrypt/decrypt card data and encrypt/decrypt cryptographic keys which are generated for the card object which is to be generated.

The card management service backend 208 generates a card object corresponding to the respective card emulation environment 206. The card object may be implemented as a JSON object.

The generated card object contains metadata associated with the targeted emulation environment, i.e. the emulation environment identified in the device application property object, a public key (or other cryptographic data or cryptographic assets) necessary to establish a first transport session key (transport session key generation data), a data model of the virtual card (i.e. data which indicates how the card data should be organised when it is implemented in the emulation environment), the card data and card keys which are encrypted and signed with a transport session key (by the card management service backend 208). The cryptographic keys are generated for each virtual card 202 and the public key is embedded in a certificate signed with the permission.AUT private key.

In a step S106, the card management service backend 108 sends the card object to the application module 212. This may use an OTA delivery method such as wireless internet or cellular transmission. However, any suitable data transmission method may be used. Any APIs which are used during the transmission are agnostic to the emulation environment 206, i.e. they can be used for either SE or HCE emulation environments.

In a step S108, the application module 212 imports the card object received from the card management service backend 108 into the respective emulation environment 206, i.e. the one indicated by the metadata inside the card object. In the event the emulation environment is an SE, the import of the card object uses an import application protocol data unit (APDU) in accordance with ISO/IEC 7816-4. For the import of the card object from the HCE emulation environment, APIs are required, which are implemented by the application module 212. Only in the emulation environment 206 is the card object decrypted/encrypted. Outside of the emulation environment and the card management service backend, the card object is always encrypted and never transmitted in plain text.

In a step S110, the respective emulation environment 206 then uses the transport base key to generate a transport session key. This transport session key is then used to authenticate and decrypt the card data and the cryptographic keys which were encrypted with the transport session key by the card management service backend 208.

In a step S112 the respective emulation environment 206 then uses the card data and cryptographic keys to create and provision an instance of the virtual card 202. The card data and cryptographic keys may be stored in storage which is local to the respective emulation environment.

That is to say, steps S100 to S112 are used to provision a virtual card 202 in a way which is agnostic to the emulation environment 206 which will be used to implement that virtual card. By using the same process, the user experience when obtaining the virtual card used by the respective application will be improved and the complexity of the card provisioning process reduced.

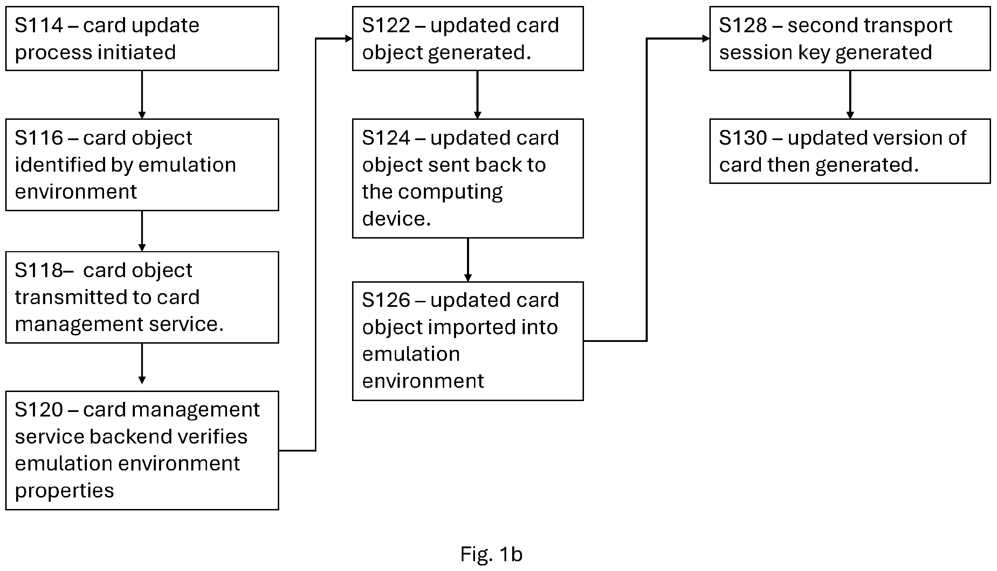

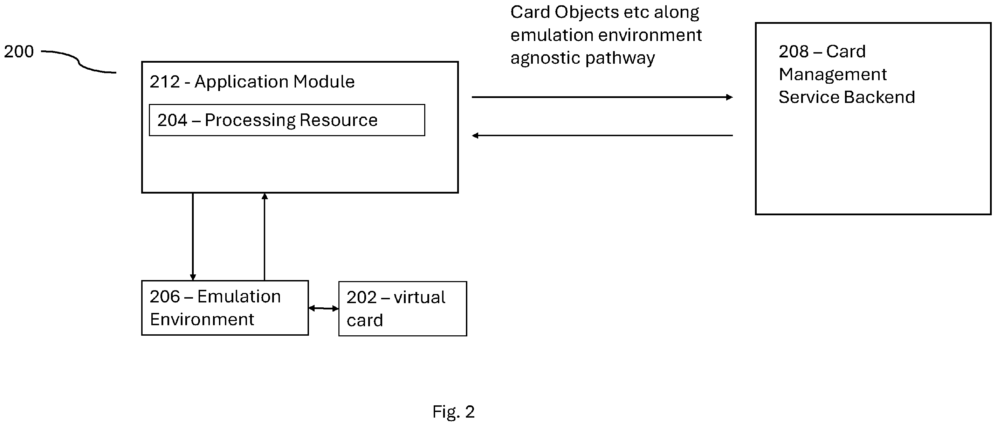

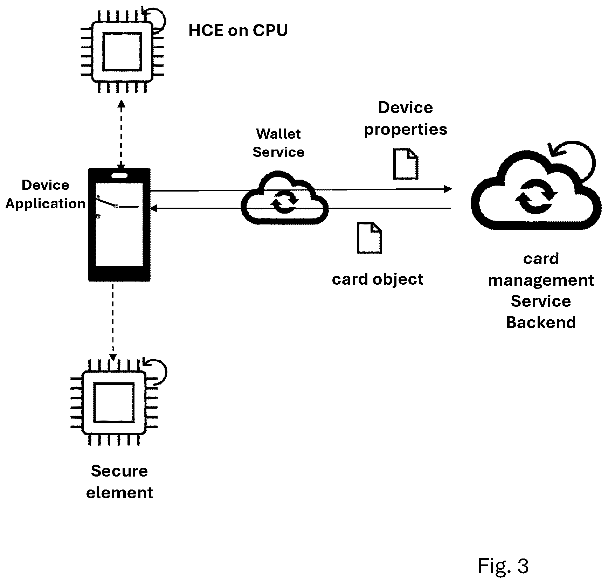

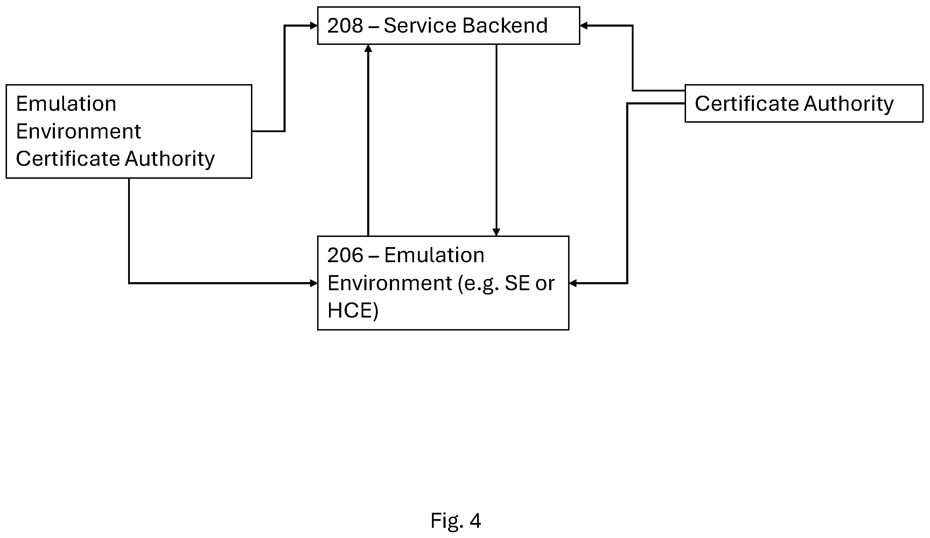

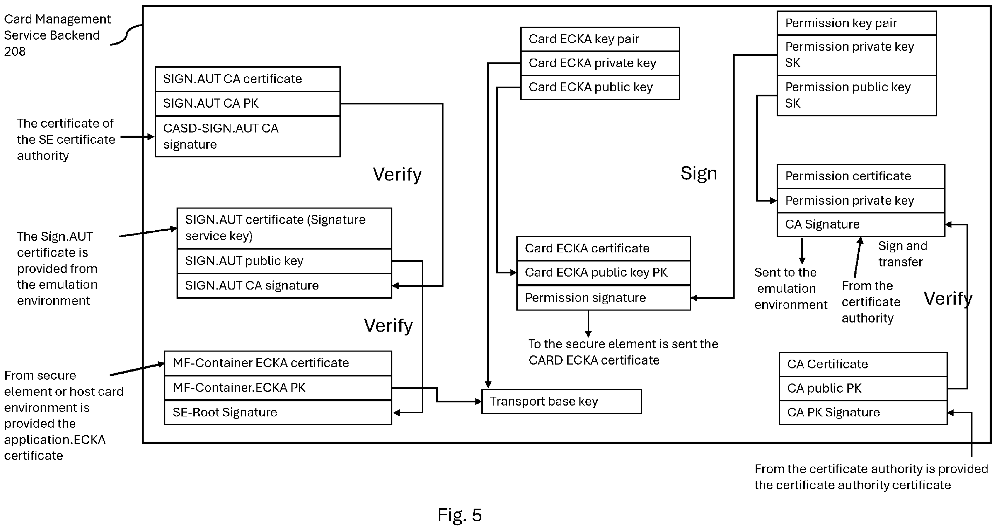

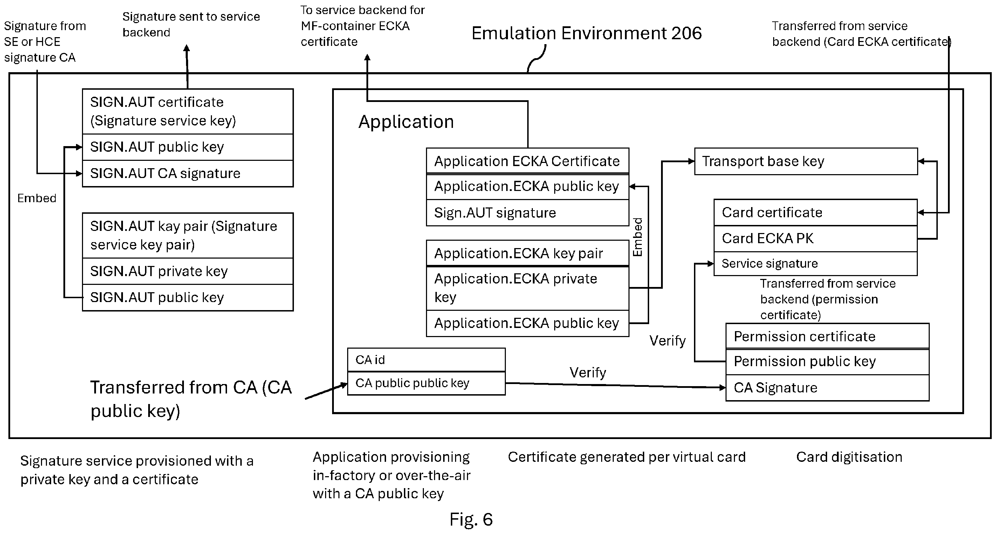

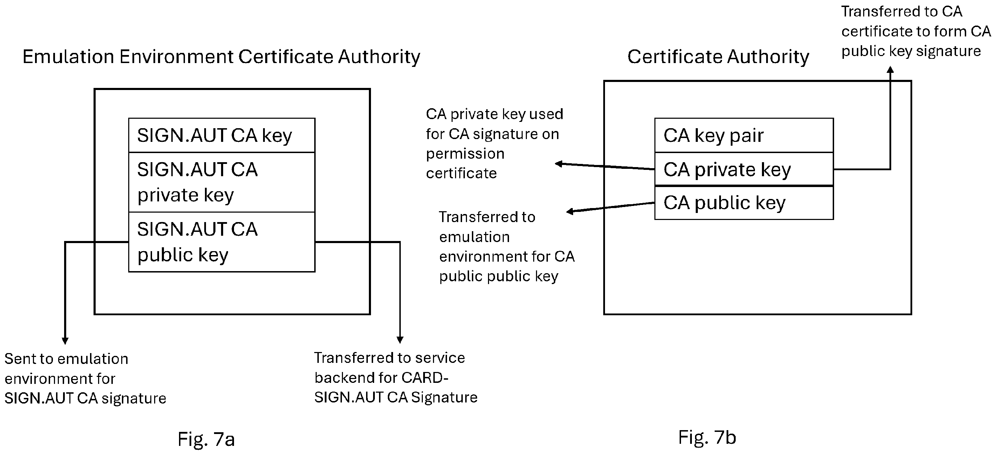

We will now describe, with reference to Figures 1b to 7a and b, a method of remotely updating the virtual card 202 which is associated with an application run by a computing device 200 using the application module 212. That is, the application module 212 runs a specific application on the computing device. The application may be a piece of software which provides one or more pieces of functionality using the computing device 200. It may be, for example, used to facilitate financial transactions, access control, or transport ticketing.

It will be shown that the method provides a way of remotely updating a virtual card which is agnostic to the emulation environment which will be used to implement the virtual card. The application module 212 comprises the software and/or hardware necessary to run the application. The application module 212 is configured to communicate with an emulation environment 206. The emulation environment 206 provides a virtual representation of a physical card called a virtual card 202. This may be in the form of an in-built embedded secure element or a host card emulation environment.

The method described with reference to Figure 1b provides a computer-implemented method of remotely updating a virtual card 202 on a computing device 200. The virtual card 202 is associated with the application executed by the computing device 200 in that it provides functionality which is implemented by the application (e.g. contactless payments, access control, or transport ticketing) by generating command and response application protocol data units (APDUs) which are needed during interaction between the computing device 200 and, for example, an NFC reader. The method 100 is implemented by the application module 212 as an example of a processing resource. We describe the application module 212 as being separate from but in communication with the emulation environment 206. The emulation environment 206 may be, for example, either of a host card emulation environment or an embedded secure element.

The method illustrated in Figure 1b provides an object-oriented approach to update a virtual card over-the-air on a computing device 200 (e.g. a mobile computing device) within an emulation environment 206 such as, for example, an embedded secure element (SE) or a host card emulation environment (HCE) of a computing device 200. This update process may be subsequent to a previous update of a card updated in accordance with steps S114 to S 130 set out below. The update process may be a first update following a card provisioning process in accordance with steps S100 to S112.

The SE and/or the HCE may deploy a signature service which is personalized with a certificate (CERT.SIGN.AUT) which is signed with a signature generated by the respective emulation environment 206. The signature service is personalized with an elliptic curve cryptography (ECC) key pair and a digital certificate which contains the public key of the key pair. The digital certificate is signed by a suitable certificate authority (SIGN.AUT CA). The emulation environment is personalized with a public key which is issued by a suitable certificate authority (APP.OWNER CA). All emulation environments which are controlled by this APP.OWNER) are personalized with the same public key. The emulation environment is also configured to generate an ECC key pair (per virtual card) which is called VirtualCard.ECKA. The public key of the key pair is embedded in a digital certificate signed by the signature service. In a step S114, a card update process is initialised which will lead to the update of virtual card 202 as created and provisioned in steps S100 to S112 as set out above. This may be responsive to a notification from the application module, which indicates an associated virtual card 202 needs to be updated. It may not be an update to the application, which is needed but, for example, an update to the card data provided in the card object sent to the application module 212 in step S106 which is needed. The update may also be to the card keys which are in the card object received from the card management service backend 208, during the initial provisioning of the card or during a previous update.

Whilst the card update process may be initialised by the application module 212, this initialisation may be responsive to a request from the card management service backend 208. The user of the computing device 200 may be provided with a notification to say the update is about to begin. The user may be provided with an option to delay or deny the update. Optionally, the user may be denied this option if, for example, the update to the virtual card 202 is safety critical or security critical.

The request in step S114 may come as a result of the user providing input via the computing device 200 which requests the update.

The initialisation of the card update process may comprise the application module 212 allocating hardware and processing resources 204 to the card update process.

Optionally, if both a HCE and SE are utilised by the computing device 200, the application module 212 may obtain an identifier which identifies the emulation environment 206. That is, an identifier which says that the emulation environment is the HCE or SE, for example, is obtained by the application module 212. Using the identifier for the emulation environment 206, the application module 212, interrogates the identified emulation environment to determine at least one of, for example, an instance of the virtual card 202 to be updated. The emulation environment 206 can then respond with a confirmation or denial of the existence of the virtual card 202.

In any case, the application module 212 requests the card object imported into the respective emulation environment (as described in step S108) which is to be updated. The application module 212 may utilise a card identifier to identify the specific card object as the emulation environment 206 may store a plurality of virtual cards. That is to say, the application module 212 begins the process of exporting the card object

In order to export the card object, the application module 212 may utilises command and response application protocol data units (APDUs) which are structured in accordance with ISO 7816-4. This is in the event the emulation environment is an SE.

In step S116, if the emulation environment is an SE, one or more command APDUs are used to obtain the transport session key generation data, the card data and the cryptographic keys generated in step S104 and imported into the emulation environment in step S108. This data makes up the card object which was imported into the emulation environment in step S108. The APDUs may be described as export APDUs.

That is to say, the application module 212 generates APDUs which are needed to export the card object from the emulation environment 206.

For the import of the data (which makes up the card object) to the HCE environment, APIs are required, which are implemented by the application module 212. Only in the emulation environment 206 is the card object is decrypted/encrypted. Outside of the HCE environment and the card management service backend, the card object is always encrypted and never transmitted in plain text.

The card object comprise cryptographic assets which can be used to identify and authenticate the emulation environment 206.These are the cryptographic assets provided by card management service backend 208 in step S106. That is, the cryptographic assets may comprise a certificate chain (CERT.Application ECKA and CERT.SIGN.AUT) which is used by the card management server (as described below) to authenticate the emulation environment 206 during the card update process. The card object may also comprise a first derivation random number which is used to establish the transport session key. The transport session key may be based on the HMAC function where the session key is equal to HMAC(base key, SDR), where SDR is different for each card object and is generated by the component which generates the card object. SDR may equal to the derivation random number.

The card object, in a step S118, is then transmitted to a card management service backend 208, which could be described as a virtual card management and card management server. The transmission may be implemented using any suitable transmission protocol or media. The transmission may also be implemented using one or more APIs. Between the card management backend and the computing device, there may be multiple backend servers. For example, if the application is a wallet, there may also be a wallet provider backend if the application module 212 implements a wallet application. The API of the card management backend 208 and of the wallet application and wallet provider backend are agnostic to the emulation environment.

The APIs of each of the backend servers between the card management backend and the computing device are agnostic to the emulation environment. This means that the request is transmitted along an environment agnostic pathway. That means, the virtual card is remotely updated using a method which is not dependent on the emulation environment, which is an improvement on previous methods used to update virtual cards on computing devices. That is to say, the update of the virtual card 202 is independent of the specific emulation environment 206. In a step S120, the card management service backend 208 verifies the emulation environment 206 from which the card object has been received. This can be implemented using any suitable approach to verifying a shared secret which is transmitted from the application module 212 to the card management service backend 208.

In one example, the certificate chain (CERT.ApplicationECKA and CERT.SIGN.AUT), which is part of the cryptographic assets which form part of the card object which is transmitted from the application module 212 to the card management service backend 208, is verified by the card management service backend 208. Following verification, a transport base key is computed by combining the Application.ECKA public key with virtual card private key (card.ECKA) using a standard ECC key agreement algorithm. The virtual card private key is received as part of the card object. The transport base key is stored in a database and is used to derive a transport session key, to encrypt/decrypt card data and cryptographic keys of the card object. The transport session key may also be derived using ephemeral asymmetric keys and certificates.

That is to say, cryptographic assets which are provided with the card object are used to verify the card object by the emulation environment. The cryptographic assets are used to form a transport base key which is then used to derive the transport session key which is used to encrypt and decrypt card data and to decrypt the card keys which are also part of the card object. The derivation may be based on a derivation random number provided with the card object. In short, the cryptographic assets are used as part of the transport session key generation data to derive the transport session key. The derivation can be implemented using any suitable key derivation technique such as, for example, a hash based on one or more of the cryptographic assets. The key derivation function may based on the HMAC function where the session key is equal to HMAC(base key, SDR), where SDR is different for each card object and is generated by the component which generates the card object. The SDR may be equal to the derivation random number. The transport session key may also be derived using ephemeral asymmetric keys and certificates.

On receiving the card object from the application module 212 and the request to update the virtual card 202 in step S118 and having completed the verification of the emulation environment 206 in step S120, the card management service backend 208 generates an updated card object in a step S122. The generation utilises the card data received in the card object (received in step S118) to generate the updated card object. The updated card object represents an updated card object which contains the data needed by the emulation environment 206 to update the virtual card at the computing device 200. For example, the updated card object comprises metadata which identifies the emulation environment identified by the card object (e.g. the SE or HCE), a public key (or other cryptographic assets) which can be used to establish a second transport session key (and an associated derivation random number), a model of the updated card, data needed to emulate the updated card and cryptographic keys which are encrypted and signed with the second transport session key (which may be distinct from the first transport session key). The transport session key may be derived using ephemeral asymmetric keys and certificates.

The updated card object may be a JSON object, embedding virtual card data and keys corresponding to the updated card.

The updated card object is then transmitted to the computing device 200 where it is received, as an updated card object, in a step S124, by the application module 212. The transmission of the updated card object may be implemented with any suitable telecommunications medium or protocol, which allows connection to the remote card management service backend 208. Alternatively or optionally, one or more APIs may be used which are agnostic to the emulation environment 206 to implement that transmission. That is to say, an environment agnostic pathway is also used to transmit the updated card object to the computing device 200. The transmission also comprises the transmission of cryptographic assets such as, for example, the certificate chain (CERT.card.ecka and CERT.permission.AUT) which is sent to the computing device 200 so that it can be provided to the emulation environment 206. The signed and encrypted card data and cryptographic keys which correspond to the updated card object are also transmitted with the updated card object (or as part of the updated card object). The application module 212 may verify the updated card object on receipt using any suitable technique. For example, the application module 212 is configured to verify the authenticity of the certificate chain with the CA public key which corresponds to the application. This is using any standard technique.

In a step S126, the application module 212 then transmits the updated card object to the emulation environment 206 with a request for it to be imported into the emulation environment 206. The application module 212 may first conduct a step of identifying which emulation environment 206 is needed. If the emulation environment is an SE, an import APDU is generated to enable the import of the updated card object into the emulation environment. If the emulation environment is an HCE, an API is used to import the updated card object into the emulation environment.

This completes the import of the updated card object where it uses the public key (or other cryptographic assets) generated in step S122 key to establish the second transport session key in a step S128 and then uses the second transport session key to decrypt the card data and card keys received in the updated card object and uses the provided model to generate an updated instance of the virtual card in a step S130.

As described above, the card management service backend 208 remotely creates and updates a virtual card 202 residing in an emulation environment 206. Based on the device properties (which give information whether SE or HCE emulation or both SE and HCE are supported on the mobile device), the card management backend 208 selects a card emulation type and generates the card object accordingly. As a first step, the first card object which is digitized on the computing device 202, creates a virtual card 202 in the selected emulation environment 206 using shared cryptographic assets, i.e. shared secret. The shared secret is used to derive a base key shared between the card management service backend and the emulation environment. This base key is used to derive a transport session key per card object transferred between the card management backend and the card emulation. The transport session key is used to sign and encrypt a card object. The generation of the transport session key uses the same base key at the card management service backend 208 and the emulation environment 206 and this enables both entities can derive the same transport session key for secure communication with each other. Once the virtual card 202 has been created, then the virtual card 202 is fully functional and can be used by the end user for tapping the mobile device to an NFC reader application for performing e.g. access control or public transit transactions. The transport session key may also be derived using ephemeral asymmetric keys and certificates.

Optionally or additionally, any cryptographic protocol leading to the establishment of a shared secret between two environments (emulation environment SE/HCE on the computing device 200 and the card management service backend 208) can be used to implement the update of the virtual card 202.

The application module 212 may initiate a virtual card update to update the virtual card and its content. This may be required to change the data which is stored inside the card (e.g. increase a stored value from 5$ to 30$, to have sufficient funds for public transit; etc).

One of the main benefits of what is described above is that no APDUs need to be generated by the card management service backend 208 and passed down to the computing device 200. Instead, the card management service backend 208 generates and updates the complete card object and exchanges it securely (encrypted and signed) with the computing device 200. On the computing device 200, the device application makes sure to import / export the encrypted card object to the emulation environment (SE or HCE). For this import / export from the mobile device application to the SE emulation environment, and vice-versa, APDUs are required which are described as import and export APDUs above. For this import / export from the mobile device application to the HCE emulation environment, and vice-versa, application-based APIs are required.

The application module 212 is agnostic to the card object generated by the card management service backend 208. The application module 212 imports and exports the card object to the emulation environment which was already defined and selected by the card management backend 208. As set out above, if the emulation environment 206 is SE, then the application module 212 generates APDUs to import or export a card object. If the emulation environment is HCE, then the card object is imported and exported through an API. The application module 212 is responsible to initiate a card creation and update process with a remote service backend and the same process flow is executed irrespective of whether the emulation environment is an SE or HCE.

The emulation environment 206 can be used to implement several virtual cards. The emulation environment 206 may, for example, implement the virtual card contactless protocol (e.g. for NFC communication). The emulation environment 206 processes the card object to create and to update a virtual card and to functionally emulate the virtual card.

All components of the described system (e.g. Wallet services) residing between a card management service backend 208 generating the card assets (i.e. card data and card keys), and the application module 212 which imports or exports the object in the embedded secure element or the host card emulation, are agnostic to the emulation environment.

The described method improves the card provisioning and updating process in numerous ways. Firstly, in order to remotely update a virtual card on a mobile computing device, the usual prior art end-to-end system is based on following components: a card management service backend providing the card assets (i.e. card keys and card data), an (optional) wallet service backend and a mobile device application. The role of the wallet provider entity is to manage the wallet service backend implementation and to manage the mobile device user. The wallet provider provides a mobile device application to access to the HCE and/or to the SE.

In the original approach, when the card is digitized in a SE embedded in the computing device, then an addition component, called SE issuer Trusted Service Manager (short SEI-TSM), is managing the life cycle of the application installed on the SE. The SEI-TSM and the card management service backend 208 generate APDU commands to digitize and update the virtual cards. The described method makes the update process independent of the emulation environment.

Additionally, in order to specifically update a virtual card via host card emulation (HCE) of the mobile device, the mobile device application requests a tokenized card object through the wallet service to the card management service backend. The tokenized card object is used to emulate the card on the mobile device (card protocol, card functionality, including pre-personalized card data and card keys). Provisioning and personalization of the card via HCE is done via one exchange of the complete card image and no sequential exchange of card-related commands is required.

Additionally, in order to update a virtual card in an (embedded) secure element (SE), the mobile device application requests to the SEI-TSM to create an application instance used to emulate the card on the mobile device. Then the mobile device application requests to the card management service backend through the wallet service backend to generate APDU commands to provision and update the SE application with the card assets. Provisioning and personalization of the card on the SE is done via sequential exchange of card-related APDU commands. That is to say, the process to update a virtual card in SE and HCE are different leading to a different user experience (impacting performance, user flow), as well as functional and technical implementation). The claimed methods improve the user experience by removing this difference.

In summary, the described methods allow to remotely create and update virtual cards on mobile devices utilizing either SE or HCE based environments in the same way, utilizing the same implementation and same use case flow. This ensures consistent system implementation and consistent performance for both underlying technologies (SE and HCE) without any noticeable difference for the end user.

The described method improves methods for creating and updating virtual cards, as compared to the usual card digitization and card update flows which requires an additional actor (i.e. SEI-TSM) and more steps. The execution of the usual flow for SE will be significant slower (leading to a worse user experience) and cannot be realized with the same emulation environment agnostic way but requires different implementations for every supported emulation environment (for example for SE and for HCE respectively).

Due to the need for the SEI-TSM and because APDUs are transferred between card management service and the SE, it is not possible to design the same flow for SE and HCE with the usual approach. The emulation environment agnostic approach described above entirely mitigates against this need, which improves system implementation, adds simplification, reduces complexity and eases the maintainability of the system

The added value of sharing the same digitization and update flow, independent of the supported emulation environment (reduction of development cost, more robust solution implementation because of code reuse, better system performance, improved transaction performance) and the same data object for HCE and SE is to be able to design a Wallet service agnostic to the card type (SE or HCE). In addition, the card management service is simplified by being able to use a common card digitization logic. By having the same flow for SE and HCE, this leads to many improvements (reduction of development cost, more robust solution because of code reuse, better system performance).

The described method enables a virtual card to be updated in a way which is agnostic to the emulation environment used to emulate the updated virtual card. This method allows to unify the process and use-case flow to digitize and update virtual cards within computing devices (e.g. mobile computing devices) independent of the underlying used technology (SE or HCE). The described embodiment unifies the communication between all involved components, as the API implementation and exchanged parameters are unified, which avoids two different functional implementations.

Additionally, to reduce the number of interactions with the backend service, the APDU commands are generated by the application, which is located at the computing device. The application does not need to request to the card management backend service to generate APDUs then execute the APDUs and send the response APDUs to the backend. By reducing the number of interactions with the backend service, the performance for card digitization, card personalization and card update are improved.

As a further advantage, the time to market and the complexity of the solution becomes similar for both of SE and HCE.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of'. The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method of provisioning a virtual card on a computing device, the virtual card associated with an application executed by the computing device, the method implemented by a processing resource, the method comprising:
providing a request to a card management server for a virtual card associated with an application, the request comprising cryptographic data identifying an emulation environment used to implement the virtual card on the computing device, wherein the request is provided to the card management server using an environment agnostic pathway;
receiving a card object corresponding to the virtual card from the card management server, wherein the card object is received using an environment agnostic pathway;
importing the card object into the emulation environment;
generating an instance of the virtual card in the emulation environment.

2. A method according to Claim 1, wherein the environment agnostic pathway comprises components which are agnostic to the emulation environment.

3. A method according to Claim 2, wherein the components utilise application programming interfaces which are agnostic to the emulation environment.

4. A method according to Claim 1, wherein the card object comprises one or more of:
a. metadata identifying the emulation environment which is to implement the virtual card;
b. transport session key generation data to establish a transport session key;
c. a data model for the card;
d. card data; and
e. card keys.

5. A method according to any preceding claim, wherein the emulation environment is one of a host card emulation environment or a secure element.

6. A computer-implemented method of updating a virtual card on a computing device, the virtual card provisioned in accordance with any one of Claims 1 to 5, the method implemented by a processing resource, the method comprising:
initialising a card update process;
obtaining a card object from an emulation environment associated with the application, wherein the card object comprises cryptographic assets associated with the emulation environment;
sending the card object to the card management server with a request for an updated card object, where the card object is sent using an environment agnostic pathway;
receiving an updated card object from the card management server via an environment agnostic pathway;
updating the virtual card using the updated card object.

7. A method according to Claim 6, wherein the method further comprises, responsive to updating the virtual card using the updated card object, verifying the update and transmitting a verification notification to the card management server.

8. A method according to Claim 6, wherein the cryptographic assets enable at least one of:
- establishment of a session key which is different per card object transfer;
- card data;
- cryptographic keys associated with the virtual card; or
- cryptographic keys encrypted and signed with a transport session key associated with the emulation environment.

9. A method according to Claim 6, wherein the request for an updated card object comprises a call to an emulation environment agnostic application programming interface.

10. A method according to Claim 6, wherein updating the virtual card using the updated card object comprises:
receiving the updated card object; and
importing the updated card object into the emulation environment.

11. A method according to Claim 6, wherein the cryptographic assets comprise one or more of:
property data which identifies the emulation environment; and
a certificate chain which is used by the card management server to authenticate the emulation environment

12. A method according to Claim 6, wherein the card object comprises at least one of:
- Card keys and card data;
- A certificate chain; or
- At least one random derivation number used to derive transport session key.

13. A non-transitory computer readable storage medium having stored thereon executable instructions that, as a result of being executed by a processor of a computer system, cause the computer system to at least perform the method of any one of claims 1 to 12.

14. A system configured to implement the method of any one of Claims 1 to 12.

15. A processing resource comprising a processor and memory including executable instructions that, as a result of execution by the processor, causes the computing device to perform the method of any one of claims 1 to 12.

## Amended claims

### Amended claims in accordance with Rule 137(2) EPC.

1. A computer-implemented method of provisioning a virtual card on a computing device, the virtual card associated with an application executed by the computing device, the method implemented by a processing resource, the method comprising:
providing a request to a card management server for a virtual card associated with an application, the request comprising cryptographic data identifying an emulation environment used to implement the virtual card on the computing device, wherein the request is provided to the card management server using an environment agnostic pathway, wherein the environment agnostic pathway comprises components which are agnostic to the emulation environment;
receiving a card object corresponding to the virtual card from the card management server, wherein the card object is received using the environment agnostic pathway;
importing the card object into the emulation environment;
generating an instance of the virtual card in the emulation environment.

2. A method according to Claim 1, wherein the components utilise application programming interfaces which are agnostic to the emulation environment.

3. A method according to Claim **1,** wherein the card object comprises one or more of:
a. metadata identifying the emulation environment which is to implement the virtual card;
b. transport session key generation data to establish a transport session key;
c. a data model for the card;
d. card data; and
e. card keys.

4. A method according to any preceding claim, wherein the emulation environment is one of a host card emulation environment or a secure element.

5. A computer-implemented method of updating a virtual card on a computing device, the virtual card provisioned in accordance with any one of Claims 1 to 4, the method implemented by a processing resource, the method comprising:
initialising a card update process;
obtaining a card object from an emulation environment associated with the application, wherein the card object comprises cryptographic assets associated with the emulation environment;
sending the card object to the card management server with a request for an updated card object, where the card object is sent using an environment agnostic pathway;
receiving an updated card object from the card management server via an environment agnostic pathway;
updating the virtual card using the updated card object.

6. A method according to Claim 5, wherein the method further comprises, responsive to updating the virtual card using the updated card object, verifying the update and transmitting a verification notification to the card management server.

7. A method according to Claim 5, wherein the cryptographic assets enable at least one of:
- establishment of a session key which is different per card object transfer;
- card data;
- cryptographic keys associated with the virtual card; or
- cryptographic keys encrypted and signed with a transport session key associated with the emulation environment.

8. A method according to Claim 5, wherein the request for an updated card object comprises a call to an emulation environment agnostic application programming interface.

9. A method according to Claim 5, wherein updating the virtual card using the updated card object comprises:
receiving the updated card object; and
importing the updated card object into the emulation environment.

10. A method according to Claim 5, wherein the cryptographic assets comprise one or more of:
property data which identifies the emulation environment; and
a certificate chain which is used by the card management server to authenticate the emulation environment

11. A method according to Claim 5, wherein the card object comprises at least one of:
- Card keys and card data;
- A certificate chain; or
- At least one random derivation number used to derive transport session key.

12. A non-transitory computer readable storage medium having stored thereon executable instructions that, as a result of being executed by a processor of a computer system, cause the computer system to at least perform the method of any one of claims 1 to 11.

13. A system configured to implement the method of any one of Claims 1 to 11.

14. A processing resource comprising a processor and memory including executable instructions that, as a result of execution by the processor, causes the computing device to perform the method of any one of claims 1 to 11.
